# EUROPEAN PATENT APPLICATION

(11) **EP 4 183 829 A1**
(43) Date of publication of application: **24.05.2023**
(21) Application number: 21843531.1
(22) Date of filing: 13.07.2021
(51) Int. Cl.: C08L 23/08, C08K 3/22, C08L 33/04, C08L 71/02

(54) **RESIN AQUEOUS DISPERSION COMPOSITION**

(30) Priority: 14.07.2020 JP 2020120850
(71) Applicant: Sumitomo Seika Chemicals Co., Ltd., Kako-gun, Hyogo 675-0145 (JP)
(72) Inventor: MIZUHASHI, Toshinari, Himeji-shi, Hyogo 672-8076 (JP); HASHIMOTO, Naoki, Himeji-shi, Hyogo 672-8076 (JP)
(74) Representative: Vossius & Partner Patentanwälte Rechtsanwälte mbB
(86) International application number: PCT/JP2021/026224
(87) International publication number: WO 2022/014557

(57) **Abstract**

The present invention provides an ethylene/glycidyl acrylate copolymer aqueous dispersion composition ensuring an obtained film (e.g., coating film) with excellent adhesion, and high stability of the film itself.

Specifically, the present invention provides an ethylene/glycidyl acrylate copolymer aqueous dispersion composition, comprising:
(A) an ethylene/glycidyl acrylate copolymer,
(B1) an ethylene oxide/propylene oxide copolymer,
(B2) a polyoxyalkylene-based non-ionic surfactant,
(C) an alkali-soluble acrylic resin emulsion, and
(D) a basic substance,
wherein (B1) and (B2) are present in a total amount of 5 to 15 parts by mass, and (C) is present in an amount of 0.1 to 50 parts by mass per 100 parts by mass of (A), and
(D) is present in an amount of 0.01 to 0.2 parts by mass per part by mass of (C).

## Description

### Technical Field

The present disclosure relates to a resin aqueous dispersion composition and the like, and more specifically, to an ethylene/glycidyl acrylate copolymer aqueous dispersion composition. The content of the literature disclosed herein is incorporated by reference in its entirety.

### Background Art

Ethylene/glycidyl acrylate copolymers have excellent water resistance, oil resistance, chemical resistance, and adhesion, and is used as an aqueous ink, glass fiber sizing agent, fiber treating agent, fiber filler, paper treating agent, steel sheet surface treating agent, and adhesives for dry lamination.

The ethylene/glycidyl acrylate copolymer used for such various applications may be used in solid form, or dissolved or dispersed in a solvent or water. Since forming a thin film is difficult when the ethylene/glycidyl acrylate copolymer is the former, it is often used as the latter. Among the latter, the use of aqueous-based products, especially aqueous dispersions, which do not require the use of a solvent, particularly from an environmental health perspective, is being promoted.

A known method for producing an ethylene/glycidyl acrylate copolymer aqueous dispersion comprises heating a mixed aqueous solution of an ethylene/glycidyl acrylate copolymer, an ethylene oxide/propylene oxide copolymer, and water to the melting point or above of the ethylene/glycidyl acrylate copolymer, melting the mixed aqueous solution, and stirring to emulsify the mixed aqueous solution; and then cooling the mixed aqueous solution to the softening point or below of the ethylene/glycidyl acrylate copolymer (Patent Literature 1).

However, the ethylene/glycidyl acrylate copolymer aqueous dispersion may cause a reduction in adhesion of the obtained coating film due to hydration of the epoxy group of the ethylene/glycidyl acrylate copolymer.

### Citation List

### Patent Literature

PTL 1: JP1995-292121A
PTL 2: JP2003-201378A
PTL 3: JP2005-206626A

### Summary of Invention

### Technical Problem

The present inventors conducted research to develop an ethylene/glycidyl acrylate copolymer aqueous dispersion composition ensuring excellent adhesion of the obtained film (e.g., coating film), and high stability of the film itself.

### Solution to Problem

The present inventors found that it is highly probable that the use of an ethylene/glycidyl acrylate copolymer aqueous dispersion composition containing each of (A) an ethylene/glycidyl acrylate copolymer, (B1) an ethylene oxide/propylene oxide copolymer, (B2) a polyoxyalkylene-based non-ionic surfactant, (C) an alkali-soluble acrylic resin emulsion, and (D) a basic substance at a specific ratio ensures an obtained film (e.g., coating film) having high adhesion and high stability of the film itself; and conducted further research.

The present disclosure, for example, includes the following aspects.

### Item 1

An ethylene/glycidyl acrylate copolymer aqueous dispersion composition, comprising:
(A) an ethylene/glycidyl acrylate copolymer,
(B1) an ethylene oxide/propylene oxide copolymer,
(B2) a polyoxyalkylene-based non-ionic surfactant,
(C) an alkali-soluble acrylic resin emulsion, and
(D) a basic substance,
   wherein (B1) and (B2) are present in a total amount of 5 to 15 parts by mass, and (C) is present in an amount of 0.1 to 50 parts by mass per 100 parts by mass of (A), and
(D) is present in an amount of 0.01 to 0.2 parts by mass per part by mass of (C).

### Item 2

The composition according to Item 1, wherein
(A) is at least one member selected from the group consisting of ethylene/glycidyl acrylate copolymers, ethylene/glycidyl methacrylate copolymers, ethylene/glycidyl methacrylate/methyl acrylate copolymers, and ethylene/glycidyl methacrylate/vinyl acetate copolymers.

### Item 3

The composition according to claim 1, wherein (B2) is at least one member selected from the group consisting of polyoxyethylene oleyl ethers, polyoxyethylene lauryl ethers, polyoxyethylene tridecyl ethers, polyoxyethylene styrenated phenyl ethers, and polyoxyethylene nonyl phenyl ethers.

### Item 4

The composition according to any one of Items 1 to 3, wherein (D) is an alkali metal hydroxide.

### Item 5

The composition according to any one of Items 1 to 4, wherein the alkali-soluble acrylic resin is an acrylic resin having at least 2-ethylhexyl acrylate as a monomer component.

### Advantageous Effects of Invention

An ethylene/glycidyl acrylate copolymer aqueous dispersion composition that ensures an obtained film (e.g., coating film) having excellent adhesion, and high stability of the film itself, is provided.

### Description of Embodiments

Each of the embodiments encompassed by the present disclosure is described in more detail below. The present disclosure preferably includes, but is not limited to, an ethylene/glycidyl acrylate copolymer aqueous dispersion composition, and the use thereof. The present disclosure includes everything that is disclosed in the present specification and acknowledged by those skilled in the art.

The ethylene/glycidyl acrylate copolymer aqueous dispersion composition included in the present disclosure comprises (A) an ethylene/glycidyl acrylate copolymer, (B1) an ethylene oxide/propylene oxide copolymer, (B2) a polyoxyalkylene-based non-ionic surfactant, (C) an alkali-soluble acrylic resin emulsion, and (D) a basic substance. Hereinafter, such an ethylene/glycidyl acrylate copolymer aqueous dispersion contained in the present disclosure may sometimes be referred to as "the composition of the present disclosure." These components may also be referred to as a component (A), component (B1), component (B2), component (C), and component (D), respectively. Furthermore, components (B1) and (B2) are sometimes collectively referred to as a component (B).

Examples of the component (A) (ethylene/glycidyl acrylate copolymer) include an ethylene/glycidyl acrylate copolymer, ethylene/glycidyl acrylate/vinyl acetate copolymer, ethylene/glycidyl acrylate/methyl acrylate copolymer, ethylene/glycidyl acrylate/vinyl acetate/methyl acrylate copolymer, ethylene/glycidyl acrylate/methyl methacrylate copolymer, ethylene/glycidyl acrylate/vinyl acetate/methyl methacrylate copolymer, ethylene/glycidyl acrylate/ethyl acrylate copolymer, ethylene/glycidyl acrylate/vinyl acetate/ethyl acrylate copolymer, ethylene/glycidyl methacrylate copolymer, ethylene/glycidyl methacrylate/vinyl acetate copolymer, ethylene/ glycidyl methacrylate/methyl acrylate copolymer, ethylene/glycidyl methacrylate/vinyl acetate/methyl acrylate copolymer, ethylene/glycidyl methacrylate/methyl methacrylate copolymer, ethylene/glycidyl methacrylate/vinyl acetate/methyl methacrylate copolymer, ethylene/glycidyl methacrylate/ethyl acrylate copolymer, ethylene/glycidyl methacrylate/vinyl acetate/ethyl acrylate copolymer, ethylene/glycidyl acrylate/ glycidyl methacrylate/vinyl acetate copolymer, ethylene/glycidyl acrylate/glycidyl methacrylate/methyl acrylate copolymer, etc. Of these, an ethylene/glycidyl acrylate copolymer, an ethylene/glycidyl methacrylate copolymer, an ethylene/glycidyl methacrylate/methyl acrylate copolymer, and an ethylene/glycidyl methacrylate/vinyl acetate copolymer are preferably used. The components (A) may be used alone or in a combination of two or more.

The ethylene present in the ethylene/glycidyl acrylate copolymer is preferably 60 and 99 mass%. The upper or lower limit of the range may be, for example, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, or 98 mass%. For example, the range may be 61 to 98 mass%.

The ethylene/glycidyl acrylate copolymer preferably has a melt flow rate (kg/m³) of about 200 to 500, more preferably about 250 to 450, or about 300 to 400. The melt flow rate is the value measured according to JISK7210 (190°C, 21.2 N load).

The component (B1) (ethylene oxide/propylene oxide copolymer) is preferably, for example, an ethylene oxide/propylene oxide copolymer having a weight average molecular weight of 6000 to 25000. The upper or lower limit of the weight average molecular weight range may be, for example, 7000, 8000, 9000, 10000, 11000, 12000, 13000, 14000, 15000, 16000, 17000, 18000, 19000, 20000, 21000, 22000, 23000, or 24000. For example, the weight average molecular weight range may be 7000 to 20000.

Examples of such an ethylene oxide/propylene oxide copolymer include Pluronic (registered trademark) F108, Pluronic (registered trademark) F88, etc. from Asahi Denka Co.

Examples of the component (B2) (polyoxyalkylene-based non-ionic surfactant) include polyoxyethylene oleyl ether, polyoxyethylene lauryl ether, polyoxyethylene tridecyl ether, polyoxyethylene styrenated phenyl ether, polyoxyethylene nonyl phenyl ether, polyoxyethylene octyl phenyl ether, and polyoxyethylene dodecyl phenyl ether. Of these, polyoxyethylene oleyl ether, polyoxyethylene lauryl ether, polyoxyethylene tridecyl ether, polyoxyethylene styrenated phenyl ether, and polyoxyethylene nonylphenyl ether are particularly preferred. Of these, polyoxyethylene oleyl ether and polyoxyethylene nonylphenyl ether are more preferred. The polyoxyalkylene-based non-ionic surfactants can be used alone or in a combination of two or more.

In the composition of the present disclosure, the component (B) is present in an amount of 5 to 15 parts by weight per 100 parts by weight of the component (A). The upper limit or lower limit of the range may be, for example, 6, 7, 8, 9, 10, 11, 12, 13, or 14. For example, the range may be 6 to 12 parts by mass. As mentioned above, the components (B1) and (B2) are collectively referred to as the component (B). Accordingly, the amount of the component (B) corresponds to the total amount of the components (B1) and (B2).

The content ratio of the components (B1) and (B2) is such that the component (B1) is preferably 33 to 97 parts by mass (in other words, the component (B2) is 3 to 67 parts by mass), per 100 parts by mass of the component (B). The upper or lower limit of the range (33 to 97 parts by mass) is, for example, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67 68, 69, 70, 71, 72, 73, 74, 75, 76, 77, 78, 79, 80, 81, 82, 83, 84, 85, 86, 87, 88, 89, 90, 91, 92, 93, 94, 95, or 96 parts by mass. For example, the range may be 34 to 96 parts by mass.

As the component (C) (alkali-soluble acrylic resin emulsion), a commercially available product can be purchased and used. Specific examples include Somarex 270K, Somarex 300, and Somarex 440 produced by Somar Corp.; as well as Voncoat HV-E, Voncoat V-E, and Voncoat 3750-E produced by DIC Corporation. Of these, Voncoat 3750-E is preferred.

The acrylic resin of the alkali-soluble acrylic resin emulsion is preferably a resin capable of forming the acrylic resin emulsion. Examples of such an acrylic resin include (meta) acrylate (co) polymers having a C₁₋₁₂ alkyl group as the monomer component (preferably as a main monomer component).

Examples of the (meta) acrylate having a C₁₋₁₂ alkyl group include methyl (meta)acrylate, ethyl (meta)acrylate, n-butyl (meta)acrylate, isobutyl (meta)acrylate, t-butyl (meta)acrylate, n-octyl (meta)acrylate, isooctyl (meta)acrylate, 2-ethylhexyl(meta)acrylate, isononyl(meta)acrylate, cyclohexyl(meta)acrylate, etc. These can be used alone or in a combination of two or more.

Of these, an acrylic resin in which 2-ethylhexyl acrylate is a monomer component is preferred. It is also preferable to use a (meta)acrylate having a C₄₋₈ alkyl group other than 2-ethylhexyl acrylate as a monomer component, in addition to 2-ethylhexyl acrylate. Examples of the (meta)acrylate having a C₄₋₈ alkyl group include n-butyl(meta)acrylate, isobutyl(meta)acrylate, t-butyl (meta)acrylate, isooctyl(meta)acrylate, n-octyl(meta)acrylate, etc. Of these, an acrylate monomer having a C₄₋₈ alkyl group is preferred, and n-butyl acrylate is more preferred. The combination use of n-butyl acrylate and t-butyl methacrylate is also preferred.

When the 2-ethylhexyl acrylate and the (meta)acrylate having a C₄₋₈ alkyl group other than the 2-ethylhexyl acrylate are used in combination, the sum of the amounts of the 2-ethylhexyl acrylate and the (meta)acrylate having a C₄₋₈ alkyl group other than the 2-ethylhexyl acrylate in a monomer component forming an acrylic resin is preferably 50 to 98 mass%, and more preferably 80 to 98 mass%. The content ratio of the 2-ethylhexyl acrylate to the (meta)acrylate having a C₄₋₈ alkyl group other than the 2-ethylhexyl acrylate in the monomer component forming an acrylic resin is such that the mass ratio expressed by (2-ethylhexyl acrylate/(meta)acrylate having a C₄₋₈ alkyl group) is preferably 9/1 to 2/8, and more preferably 75/25 to 25/75.

When the 2-ethylhexyl acrylate and (meta)acrylate having a C₄₋₈ alkyl group other than 2-ethylhexyl acrylate are used in combination, it is further preferable to use methyl(meta)acrylate, ethyl(meta)acrylate, and like meta(acrylates) having an alkyl group with a carbon number of 2 or less. The use amount thereof is preferably 1 to 10 mass% in a monomer component forming an acrylic resin.

It is also preferred to use a monomer having an acid group in combination with these (meta)acrylates. Examples of monomers having an acid group include carboxy-containing vinyl monomers, such as acrylic acid, methacrylic acid, itaconic acid, maleic acid, maleic anhydride, phthalic acid, phthalic anhydride, and crotonic acid. Of these, at least one of acrylic acid and methacrylic acid is preferably used. When a monomer having these acid groups is used, it is preferably used in such a manner that the total amount of acid groups is within the range of 0.5 to 10 mass% in a monomer component forming an acryl copolymer. The monomers containing an acid group can be used alone or in a combination of two or more.

It is also preferable to further use a nitrogen-containing vinyl monomer as a monomer component of the acrylic resin. The nitrogen-containing vinyl monomer can interact with acid groups in acrylic resin emulsion particles, particularly carboxyl groups, to provide more suitable cohesion to the adhesive layer. Examples of the nitrogen-containing vinyl monomer include N-vinylpyrrolidone, N-vinylcaprolactam, acryloylmorpholine, acrylonitrile, acrylamide, N,N-dimethylacrylamide, and dimethylaminoethyl(meth)acrylate. The content of the nitrogen-containing vinyl monomer in the monomer component forming an acrylic resin is preferably 0.1 to 4.5 mass%, and more preferably 0.5 to 3.5 mass%. The nitrogen-containing vinyl monomers can be used alone or in a combination of two or more.

Although it is not particularly limited, the acrylic resin is preferably present in the alkali-soluble acrylic resin emulsion, in an amount, for example, about 15 to 30 mass%. The upper or lower limit of the range may be, for example, 15.5, 16, 16.5, 17, 17.5, 18, 18.5, 19, 19.5, 20, 20.5, 21, 21.5, 22, 22.5, 23, 23.5, 24, 24.5, 25, 25.5, 26, 26.5, 27, 27.5, 28, 28.5, 29, or 29.5 mass%. For example, the range may be 20 to 25 mass%.

In the composition of the present disclosure, the component (C) is present in an amount of 0.1 to 50 parts by mass per 100 parts by mass of the component (A). The upper or lower limit of the range may be, for example, 0.2, 0.3, 0.4, 0.5, 0.6, 0.7, 0.8, 0.9, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30 31, 32, 33, 34, 35, 36, 37, 38, 39, 40, 41, 42, 43, 44, 45, 46, 47, 48, or 49 parts by mass. For example, the range may be 0.2 to 40 parts by mass.

In the composition of the present disclosure, when the content of the component (C) is described based on the solids content (acrylic resin) contained in the component (C), the solids content of the component (C) is, for example, preferably about 0.025 to 1.25 parts by mass per 100 parts by mass of the component (A). The upper or lower limit of the range may be, for example, 0.05, 0.1, 0.15, 0.2, 0.25, 0.3, 0.35, 0.4, 0.45, 0.5, 0.6, 0.7, 0.8, 0.9, 1, 1.1, or 1.2 parts by mass. For example, the range may be 0.1 to 0.5 parts by mass.

Examples of the component (D) (basic substance) include alkali metal hydroxides, such as sodium hydroxide and potassium hydroxide; amines such as triethanolamine, dimethylaminoethanol, and diisopropanolamine; and ammonia. Of these, sodium hydroxide and potassium hydroxide are preferably used. The basic substances can be used alone or in a combination of two or more.

In the composition of the present disclosure, the component (D) is present in an amount of 0.01 to 0.2 parts by mass per part of the component (C). The upper or lower limit of the range is, for example, 0.015, 0.02, 0.025, 0.03, 0.035, 0.04, 0.045, 0.05, 0.055, 0.06, 0.065, 0.07, 0.075, 0.08, 0.085, 0.09, 0.095, 0.1, 0.105, 0.11, 0.115 0.12, 0.125, 0.13, 0.135, 0.14, 0.145, 0.15, 0.155, 0.16, 0.165, 0.17, 0.175, 0.18, 0.185, 0.19, or 0.195 parts by mass. For example, the range may be 0.015 to 0.19 parts by mass.

The component (D) is preferably present in an amount of 0.01 to 1 part by mass per 100 parts by weight of the component (A). The upper or lower limit of the range is, for example, 0.02, 0.03, 0.04, 0.05, 0.06, 0.07, 0.08, 0.09, 0.10, 0.11, 0.12, 0.13, 0.14, 0.15, 0.16, 0.17, 0.18, 0.19, 0.20, 0.21, 0.22, 0.23, 0.24 0.25, 0.26, 0.27, 0.28, 0.29, 0.30, 0.31, 0.32, 0.33, 0.34, 0.35, 0.36, 0.37, 0.38, 0.39, 0.40, 0.41, 0.42, 0.43, 0.44, 0.45, 0.46, 0.47, 0.48, 0.49, 0.50, 0.51, 0.52, 0.53, 0.54, 0.55, 0.56, 0.57, 0.58, 0.59, 0.60, 0.61, 0.62, 0.63, 0.64, 0.65, 0.66, 0.67, 0.68, 0.69, 0.70, 0.71, 0.72, 0.73, 0.74, 0.75, 0.76 0.77, 0.78, 0.79, 0.80, 0.81, 0.82, 0.83, 0.84, 0.85, 0.86, 0.87, 0.88, 0.89, 0.90, 0.91, 0.92, 0.93, 0.94, 0.95, 0.96, 0.97, 0.98, or 0.99 parts by mass. For example, the range may be 0.02 to 0.99 parts by mass.

The composition of the present disclosure is an aqueous dispersion composition, which contains an aqueous medium. The aqueous medium is preferably water. The water is not particularly limited, and examples include tap water, industrial water, ion-exchanged water, deionized water, and pure water. Deionized water or pure water is particularly preferred. The content of the water is not particularly limited as long as the effects are not impaired. For example, the water can be present in an amount of 50 to 500 parts by mass, and preferably 65 to 200 parts by mass, per 100 parts by mass of the component (A). The upper or lower limit of the range (50 to 500 parts by mass) is, for example, 55, 60, 65, 70, 75, 80, 85, 90, 95, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, or 490 parts by mass. For example, the range may be 70 to 300 parts by mass.

The composition of the present disclosure may also contain other components as long as the effects are not impaired. Such other components include water-soluble resins such as polyvinyl alcohol, sodium polyacrylate, carboxymethyl cellulose, and hydroxyethyl cellulose.

Examples of the method for preparing the aqueous dispersion composition of the present disclosure include the following. The component (A), component (B1), component (B2), and water are added to a pressure-resistant heat-resistant container (e.g. autoclave), and mixed under sealed conditions to heat to an appropriate temperature. The heat temperature is preferably the melting point or more and the decomposition temperature or less of the component (A). The heat temperature is, for example, 80 to 300°C, preferably 120 to 250°C, and more preferably 140 to 200°C. After the obtained mixture is cooled (e.g., cooled to a low temperature of 40 to 60°C), the components (C) and (D) can be added and further mixed to prepare an aqueous dispersion composition of the component (A). Mixing is preferably performed by stirring.

In the present specification, the term "comprising" includes "consisting essentially of" and "consisting of." In addition, the present disclosure includes all combinations with any of the constituent requirements described in this specification.

Various characteristics (properties, structure, function, etc.) described in the embodiments in the present disclosure can be combined in any combination to identify the subject matter present in the present disclosure. Specifically, the present disclosure includes all of the subject matter comprising any combination of each of the combinable properties disclosed in the present specification.

### Examples

Embodiments of the present disclosure are explained with reference to Examples; however, the embodiments of the present disclosure are not limited to the following examples.

### Example 1

160 g of an ethylene/glycidyl methacrylate copolymer (ethylene content: 80 wt%, trade name of Sumitomo Chemical Corporation; Bondfast CG5001), 12.8 g of an ethylene oxide/propylene oxide copolymer (weight average molecular weight: 16500, trade name of Sanyo Chemical Industries Ltd; Newpol PE-128), 3.2 g of polyoxyethylene oleyl ether, and 264 g of pure water were placed in a 1-L autoclave vessel, followed by sealing. Subsequently, a stirrer was started, and the temperature in the autoclave was raised to 180°C while stirring the content at 500 rpm. While the internal temperature was kept at 180°C, stirring was further performed for 15 min. Thereafter, the contents were cooled to 50°C under stirring to obtain a mixture. 0.68 g of an alkali-soluble acrylic resin emulsion (solids content: 23.6%, trade name of DIC Corporation; Voncoat 3750-E) and 0.032 g of NaOH were mixed with the obtained mixture, followed by stirring for 15 minutes to obtain an ethylene/glycidyl acrylate copolymer aqueous dispersion.

The ethylene/glycidyl methacrylate copolymer (Bondfast CG5001) used has a melt flow rate (kg/m³) value of 380 measured according to JISK7210 (190°C, 21.2 N load).

### Example 2

The same procedure as in Example 1 was performed, except that 6.8 g of an alkali-soluble acrylic resin emulsion and 0.16 g of NaOH were used to obtain an ethylene/glycidyl acrylate copolymer aqueous dispersion.

### Example 3

The same procedure as in Example 1 was performed, except that 6.8 g of an alkali-soluble acrylic resin emulsion and 0.8 g of NaOH were used to obtain an ethylene/glycidyl acrylate copolymer aqueous dispersion.

### Example 4

The same procedure as in Example 1 was performed, except that 34 g of an alkali-soluble acrylic resin emulsion and 1.6 g of NaOH were used to obtain an ethylene/glycidyl acrylate copolymer aqueous dispersion.

### Comparative Example 1

The same procedure as in Example 1 was performed, except that an alkali-soluble acrylic resin emulsion and NaOH were not added to obtain an ethylene/glycidyl acrylate copolymer aqueous dispersion.

### Comparative Example 2

The same procedure as in Example 1 was performed, except that NaOH was not added and 0.68 g of the alkali-soluble acrylic resin emulsion was used, to obtain an ethylene/glycidyl acrylate copolymer aqueous dispersion.

### Comparative Example 3

The same procedure as in Example 1 was performed, except that 0.68 g of the alkali-soluble acrylic resin emulsion and 0.16 g of NaOH were used to obtain an ethylene/glycidyl acrylate copolymer aqueous dispersion.

### Comparative Example 4

The same procedure as in Example 1 was performed, except that 6.8 g of the alkali-soluble acrylic resin emulsion and 0.032 g of NaOH were used to obtain an ethylene/glycidyl acrylate copolymer aqueous dispersion.

### Comparative Example 5

The same procedure as in Example 1 was performed, except that 34 g of the alkali-soluble acrylic resin emulsion and 0.32 g of NaOH were used to obtain an ethylene/glycidyl acrylate copolymer aqueous dispersion.

The adhesion and appearance of the ethylene/glycidyl acrylate copolymer aqueous dispersion obtained in the Examples and Comparative Examples were evaluated according to the following method. Table 1 shows the obtained results.

0.2 g of an aminosilane coupling agent (3-aminopropyltriethoxysilane) was added to 100 g of each of the ethylene/glycidyl acrylate copolymer aqueous dispersions obtained in the Examples and the Comparative Examples, followed by stirring and mixing for 30 minutes. A coating having a film thickness of about 4 µm after drying was then applied to a glass plate (thickness: 2 mm) using a coating machine (trade name of Nippon Cedars Service Co., Ltd., Bar coater No. 4) so that the thickness of the coating film after drying was about 4 µm. The film was then heated and dried in an oven at 150°C for 5 min. The presence or absence of cracks in the appearance of the obtained film was visually confirmed. Cellophane tape was applied to the coating film after a scratch was made in a grid pattern with 5 mm spacing according to JIS K5400 (Cross-Cut Tape Peeling Test). One to two minutes after the cellophane tape was adhered, one end of the tape was held and peeled at a right angle, followed by an adhesiveness evaluation. The following shows the appearance and adhesion evaluation criteria.

### Appearance evaluation

∘: No cracks
×: Cracks

### Adhesion evaluation

∘: Area in which a coating film was peeled off was less than 5%.
×: Area in which a coating film was peeled off was 5% or more.

**Table 1**

| | Appearance | Adhesion |
|---|---|---|
| Example 1 | ○ | ○ |
| Example 2 | ○ | ○ |
| Example 3 | ○ | ○ |
| Example 4 | ○ | ○ |
| Comparative Example 1 | × | × |
| Comparative Example 2 | ○ | × |
| Comparative Example 3 | × | O |
| Comparative Example 4 | ○ | × |
| Comparative Example 5 | ○ | × |

## Claims

1. An ethylene/glycidyl acrylate copolymer aqueous dispersion composition, comprising:
(A) an ethylene/glycidyl acrylate copolymer,
(B1) an ethylene oxide/propylene oxide copolymer,
(B2) a polyoxyalkylene-based non-ionic surfactant,
(C) an alkali-soluble acrylic resin emulsion, and
(D) a basic substance,
wherein (B1) and (B2) are present in a total amount of 5 to 15 parts by mass, and (C) is present in an amount of 0.1 to 50 parts by mass per 100 parts by mass of (A), and
(D) is present in an amount of 0.01 to 0.2 parts by mass per part by mass of (C).

2. The composition according to claim 1,
wherein
(A) is at least one member selected from the group consisting of ethylene/glycidyl acrylate copolymers, ethylene/glycidyl methacrylate copolymers, ethylene/glycidyl methacrylate/methyl acrylate copolymers, and ethylene/glycidyl methacrylate/vinyl acetate copolymers.

3. The composition according to claim 1, wherein (B2) is at least one member selected from the group consisting of polyoxyethylene oleyl ethers, polyoxyethylene lauryl ethers, polyoxyethylene tridecyl ethers, polyoxyethylene styrenated phenyl ethers, and polyoxyethylene nonyl phenyl ethers.

4. The composition according to any one of claims 1 to 3, wherein (D) is an alkali metal hydroxide.
